Europäisches Patentamt

European Patent Office

Office européen des brevets

(19)

(11) EP 0 948 990 A1

(12) **EUROPÄISCHE PATENTANMELDUNG**

(43) Veröffentlichungstag:
13.10.1999 Patentblatt 1999/41

(51) Int Cl.6: **B01D 53/48**, B01D 53/68,
B01D 53/70, A62D 3/00

(21) Anmeldenummer: 99810179.4

(22) Anmeldetag: 03.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 27.03.1998 DE 19813582

(71) Anmelder: ABB RESEARCH LTD.
8050 Zürich (CH)

(72) Erfinder: Niemeyer, Lutz, Dr.
5242 Birr (CH)

(74) Vertreter: Kaiser, Helmut, Dr. et al
ABB Business Services Ltd.,
Intellectual Property (SLE-I),
Haselstrasse 16 / Bldg 699
5401 Baden (CH)

(54) **Verfahren zur Entsorgung eines in einem Behälter eingeschlossenen, fluorierten Gases und Vorrichtung zur Durchführung dieses Verfahrens**

(57) Das Verfahren dient der Entsorgung eines in einem Behälter (1) eingeschlossenen fluorierten, insbesondere Schwefelhexafluorid und/oder ein Fluorcarbon enthaltenden, Gases. Das Gas wird aus dem Behälter (1) in einen Reaktor (3) geführt, in dem ein chemisch wirkender Reaktionspartner (4) vorgesehen ist. Dieser Reaktionspartner (4) bildet mit dem Gas überwiegend feste Reaktionsprodukte. Die Reaktion wird bei einer im Reaktor (3) erzeugten Grenztemperatur eingeleitet und danach kontrolliert geführt.

Fig.2

EP 0 948 990 A1

## Beschreibung

TECHNISCHES GEBIET

Bei der Erfindung wird ausgegangen von einem Verfahren nach dem Oberbegriff von Patentanspruch 1. Die Erfindung betrifft auch eine Vorrichtung zur Durchführung des Verfahrens.

Fluorierte Gase, wie insbesondere Schwefelhexafluorid ($SF_6$) oder Fluorcarbone, wie z.B $CF_4$, sind technisch wichtige Gase und werden mit grossem Vorteil in der elektrischen Energietechnik, insbesondere zum Löschen von Lichtbögen und als Dielektrikum, verwendet. Sie sind allerdings starke Treibhausgase und dürfen daher nicht in die Atmosphäre gelangen. Sie müssen daher entweder systematisch wiederverwendet oder aber recycliert werden. Dies erfordert spezielle und vergleichsweise aufwendige Gasreinigungsvorrichtungen.

STAND DER TECHNIK

Ein Verfahren der eingangs genannten Art und eine Vorrichtung zur Durchführung dieses Verfahrens sind in FR 27 32 608 A1 beschrieben. Bei diesem Verfahren wird in der Löschkammer eines elektrischen Schalters befindliches und mit unerwünschten Lichtbogenzersetzungsprodukten verunreinigtes $SF_6$ in einen Reaktor gepumpt, in den eine die Zersetzungsprodukte neutralisierende Lösung eingesprüht wird. Das von den Zersetzungsprodukten befreite, reine Gas wird aus dem Reaktor in ein Speichergefäss geführt und kann nun weiter verwendet werden.

KURZE DARSTELLUNG DER ERFINDUNG

Der Erfindung, wie sie in den Patentansprüchen angegeben ist, liegt die Aufgabe zugrunde, das Verfahren der eingangs genannten Art derart weiterzubilden, dass es in einfacher und wirtschaftlicher Weise ausgeführt werden kann, sowie Vorrichtungen anzugeben, die zu eine besonders vorteilhaften Ausführung des Verfahrens geeignet sind.

Das Verfahren nach der Erfindung zeichnet sich dadurch aus, dass Lichtbogenzersetzungsprodukte sowie unzersetztes fluoriertes Gas durch chemische Reaktionen innerhalb kurzer Zeit in umweltkompatible Substanzen umgewandelt werden. Mit geringem verfahrenstechnischem Aufwand können so das nicht mehr verwendbare Gas sowie die unerwünschten Lichtbogenzersetzungsprodukte vor Ort umweltgerecht und rasch entsorgt werden. Hierbei macht sich das erfindungsgemässe Verfahren in vorteilhafter Weise die Eigenschaft des zu entsorgenden Gases zunutze, dass es zwar bei Normaltemperatur chemisch äusserst stabil ist, sich jedoch bei erhöhter Temperatur in Anwesenheit geeigneter Reaktionspartner chemisch zersetzt und in feste, nichtkorrosive und daher problemlos zu entsorgende Substanzen umgewandelt wird.

KURZE BESCHREIBUNG DER ZEICHNUNG

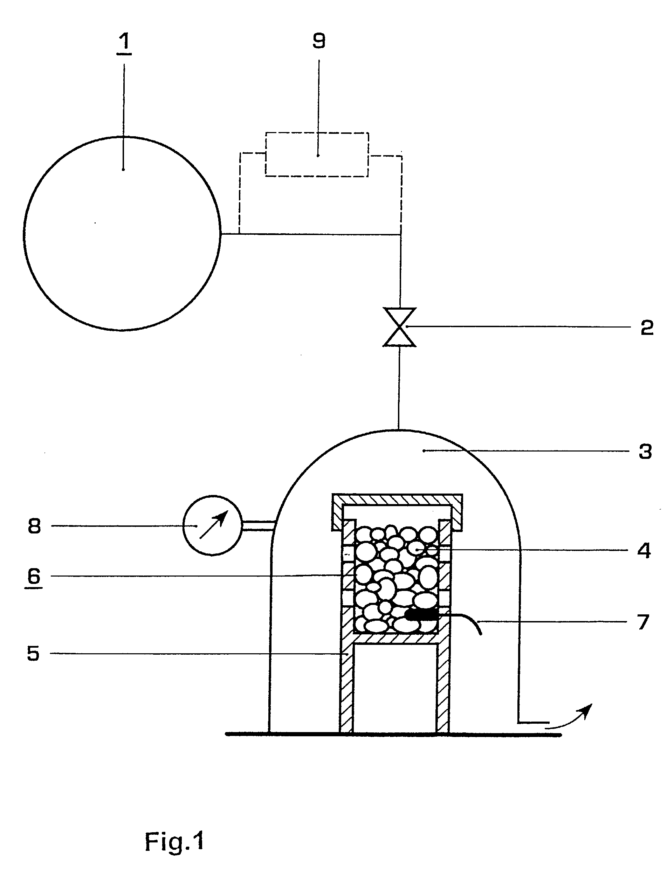

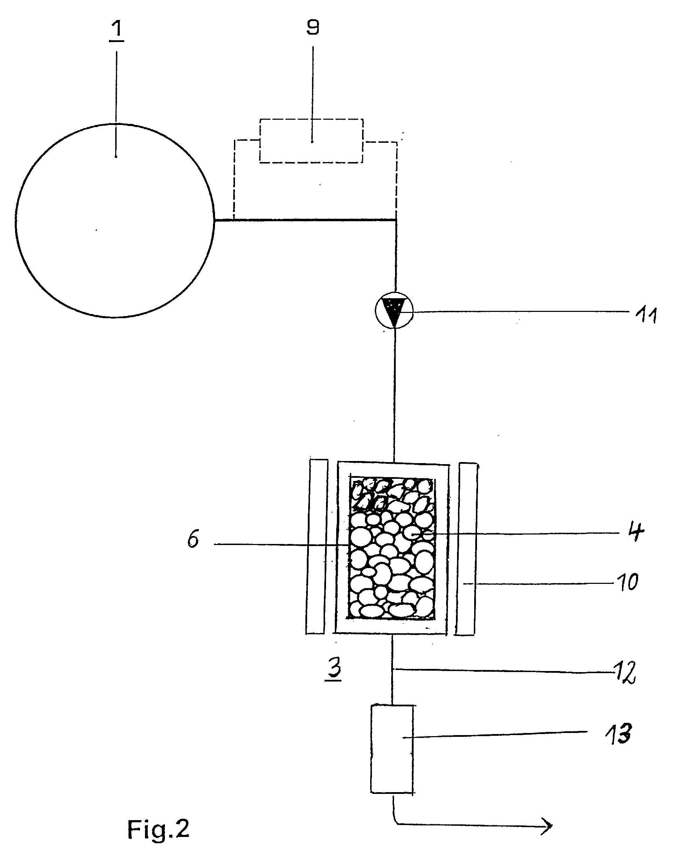

Bevorzugte Ausführungsbeispiele der Erfindung und die damit erzielbaren weiteren Vorteile werden nachfolgend anhand von Zeichnungen näher erläutert. Hierbei zeigen die Figuren 1 und 2 jeweils in stark vereinfachter Weise zwei Vorrichtungen zur Durchführung des erfindungsgemässen Verfahrens.

WEGE ZUR AUSFÜHRUNG DER ERFINDUNG

In den beiden Figuren bezeichnen gleiche Bezugszeichen auch gleichwirkende Teile. In Fig.1 bezieht sich das Bezugszeichen 1 auf einen Behälter, in dem das zu entsorgende Gas vorgesehen ist. Ein solcher Behälter kann beispielsweise der Innenraum eines elektrischen Apparates, wie etwa ein Schalter, ein Sammelschienenabschnitt, ein Ableiter oder ein Messwandler, sein. Über ein Ventil 2 wird das Gas einem evakuierten Reaktionsbehälter eines Reaktors 3 zugeführt, in dem sich ein fester oder flüssiger Reaktionspartner 4 befindet. In Fig.1 ist ein fester Reaktionspartner in eine wärmefeste, gasdurchlässige Tragvorrichtung, beispielsweise einen verschliessbaren Korb 5, in dessen Wand Durchgangsöffnungen vorgesehen sind, eingebettet. Eine Zündvorrichtung 7 erzeugt lokal die für den Einsatz der Reaktion erforderliche Temperatur und setzt dadurch eine Reaktion in Gang mit einer zur Aufrechterhaltung der Reaktion ausreichenden Reaktionsenthalpie. Nach der Zündung wird die Reaktionstemperatur durch die Reaktionsenthalpie aufrechterhalten bis alles Gas reagiert hat.

Der Reaktionspartner ist so gewählt, das die Reaktionsprodukte ausschliesslich Feststoffe sind. Dadurch zieht der Reaktor mit fortschreitende Reaktion das Gas vollständig aus dem Behälter 1 ab und wirkt somit wie eine Pumpe. Die Menge des Reaktionspartners ist für die zu entsorgende Gasmenge bemessen. Der vollständige Ablauf der Reaktion wird über den im Reaktionsbehälter 1 herrschenden Gasdruck mit Hilfe eines Druckmessgerätes 8 festgestellt. Zeigt dieses Gerät den Wert Null an, so kann hieraus auf das Ende der Reaktion und damit auf eine vollständige Gasentsorgung geschlossen werden.

In den Strömungspfad des zu entsorgenden Gases vom Behälter 1 zum Reaktor 3 kann gegebenenfalls ein (gestrichelt dargestelltes) Korrosionsschutzfilter 9 eingesetzt werden. Dies kann vor allem dann von Vorteil sein, wenn das zu entsorgende Gas eine hohe Konzentration an korrosiven Zersetzungsprodukten (im Fall von SF6 beispielsweise HF,...) enthält. Das Korrosionsschutzfilter 9 hält die korrosiven Zersetzungsprodukte weitgehend zurück und verhindert so eine Beschädigung des Reaktors. Solcher Korrosionsschutz gehört zur Standardausrüstung von Gasreinigungsapparaturen. Verbleibende Reste der Zersetzungsprodukte werden durch die chemische Reaktion im Reaktor aus dem Gas entfernt. Bei einem nur eine geringe Konzentration an Zersetzungsprodukten aufweisenden Gas, können die Zersetzungsprodukte ohne den Einsatz eines Korrosionsschutzfilters 9 vom Reaktionspartner 4 chemisch gebunden werden.

Geeignete Reaktionen sind solche mit Alkali-, Erdalkali-, und/oder Aluminiumoxiden. Bevorzugte Beispiele sind

$$SF_6 + 4\,Na_2O \rightarrow 6\,NaF + Na_2SO_4 \qquad (1)$$

$$SF_6 + 4\,CaO \rightarrow 3\,CaF_2 + CaSO_4 \qquad (2)$$

Auch Metalle oder Metallegierungen, beispielsweise Aluminium, kommen-gegebenenfalls auch in flüssiger Form - als Reaktionspartner infrage.

Bei allen diesen Reaktionen entstehen ausschliesslich nichtgiftige, mineralische Feststoffe die in der Natur vorkommen und daher problemlos weiterverwendet oder deponiert werden können, wie z.B. Gips ($CaSO_4$) oder Flusspat ($CaF_2$), Aluminiumfluorid ($AlF_3$) oder Kryolith (Mischverbindung aus NaF und $AlF_3$).

Bei den einzelnen Reaktionen (1) und (2) werden unterschiedliche Reaktionswärmen freigesetzt. Die Reaktionswärmen sind von der Grössenordnung einiger 1000 kJoule/kg Reaktionspartner. Durch geeignete Mischung zweier, dreier oder beliebig weiterer Reaktionspartner kann die Reaktion in besonders vorteilhafter Weise gesteuert werden, da dann die Reaktion in Teilreaktionen mit jeweils unterschiedlichen Reaktionsenthalpien verläuft. Hierdurch wird in besonders einfacher Weise eine verfahrenstechnisch gut beherrschbare, effektive Reaktionstemperatur erreicht, bei der Reaktionsinstabilitäten, wie Verlöschen oder Explosion, vermieden werden. Es ist hierbei selbstverständlich darauf zu achten, dass aus dem Reaktor in ausreichendem Masse Wärme abgeführt wird, um das Auftreten dieser Reaktionsinstabilitäten zu verhindern. Der Bedarf an Reaktionsmaterial pro $SF_6$ Menge ist von der Grössenordnung 0,7 kg Reaktionsmaterial/kg $SF_6$.

Die Zündvorrichtung beruht im wesentlichen auf den folgenden drei Zündmechanismen:

Elektrisch: Ein Glühdraht erzeugt lokal die erforderliche Zündtemperatur. Der Glühdraht zündet eine Zündkapsel, deren chemische Reaktionswärme die erforderliche lokale Temperaturerhöhung erzeugt.
Chemisch: Zwei extrem reaktionsfähige Substanzen werden durch mechanisches Zerstören einer Trennwand zusammengebracht und damit zur Reaktion gebracht. Beispiel: Natrium und Wasser.
Mechanisch: Eine mechanische Krafteinwirkung löst, ähnlich wie beim Airbag oder bei einer Schusswaffe, die Reaktion eines Zündgemisches aus.

Als Reaktionsbehälter des Reaktors 3 ist im allgemeinen ein druckfestes Gefäss vorgesehen, das auf die Druckbelastung der Anlage ausgelegt ist. Alternativ kann der Reaktionsbehälter als flexibles, aufblasbares Gehäuse, beispielsweise als zusammenfaltbarer Ballon, ausgebildet sein, in den das Reaktionsmaterial entweder als kompakter Körper oder als Wandbeschichtung eingebettet ist. Dieser Ballon wird mit dem zu entsorgenden Gas aufgeblasen. Das Ende der Reaktion wird dadurch angezeigt, dass der Ballon in sich zusammenfällt. Hiermit lässt sich eine besonders einfache, leicht bedienbare und kostengünstige Lösung erzielen.

Die Reaktionsprodukte werden nach Öffnen des Behälters 3 aus dem Korb 5 ausgeschüttet. Der Korb 5 kann anschliessend neu befüllt werden, so dass die Vorrichtung wiederverwendbar ist. Die ausgeschütteten festen Reaktionsprodukte können als natürliche Mineralien beliebig und ohne Einschränkung deponiert oder wiederverwendet werden. Im Fall der Ballonlösung kann der gesamte Ballon als normaler Abfall entsorgt werden.

Anstatt durch eine Zündvorrichtung 7 kann die chemische Reaktion auch auf einem anderen Weg eingeleitet werden. Wichtig ist vor allem, dass eine die Reaktion einleitende Grenztemperatur überschritten wird. Diese gegebenenfalls durch einen Katalysator absenkbare Grenztemperatur wird beim Ausführungsbeispiel gemäss Fig.2 durch Aufheizen eines den Reaktionspartner 4 enthaltenden Filters 6 erreicht. Zu diesem Zweck weist das Filter 6 eine Heizung 10 auf. Das zu entsorgende Gas wird aus dem Behälter 1 von einem Kompressor 11 durch den Reaktor 3 gedrückt, nachdem durch Einschalten der Heizung 10 das Filter 6 auf eine oberhalb der Grenztemperatur liegende Temperatur gebracht worden ist. Diese Temperatur liegt beispielsweise bei CaO als Reaktionspartner 4 (Reaktionsgleichung 2) bei ca. 500°C. Nach Einleitung der Reaktion wird durch Überwachung der Temperatur im Inneren des Filters 6, durch Überwachung und Regelung des Gasdurchsatzes und durch Regelung der Heizung 10 sichergestellt, dass die Reaktion kontrolliert abläuft. Inerte Gaskomponenten, beispielsweise Stickstoff, werden über einen Auslass 12 des Filters 6 in die Atmosphäre abgelassen. Gegebenenfalls kann dem beheizten Filter 6 ein nicht beheiztes, kaltes Filter 13 nachgeschaltet werden, das aus dem abgelassenen Gas Restkonzentrationen reaktiver Gase entfernt.

Bezugszeichenliste

1    Behälter
2    Ventil
3    Reaktionsbehälter
4    Reaktionspartner .
5    Korb
6    Filter
7    Zündvorrichtung
8    Druckmessgerät

9    Korrosionsschutzfilter
10   Heizung
11   Kompressor
12   Auslass
13   Filter

**Patentansprüche**

1.  Verfahren zur Entsorgung eines in einem Behälter (1) eingeschlossenen fluorierten, insbesondere Schwefelhexafluorid und/oder ein Fluorcarbon enthaltenden, Gases, bei dem das Gas aus dem Behälter (1) in einen Reaktor (3) geführt und dort behandelt wird, dadurch gekennzeichnet, dass im Reaktor (3) mindestens ein mit dem Gas bei erhöhter Temperatur chemisch reagierender erster Reaktionspartner (4) verwendet wird, welcher mit dem Gas unter Bildung von überwiegend festen Reaktionsprodukten chemisch reagiert, und dass die chemischen Reaktion durch Erzeugen einer Grenztemperatur im Reaktor (3) eingeleitet und danach kontrolliert geführt wird.

2.  Verfahren nach Anspruch 1, dadurch gekennzeichnet, dass die Reaktion durch Aufheizen eines den ersten Reaktionspartner (4) enthaltenden Filters (6) auf die Grenztemperatur eingeleitet wird.

3.  Verfahren nach Anspruch 2, dadurch gekennzeichnet, dass nach Einleiten der Reaktion die Reaktionstemperatur im Filter (6) über die Durchflussrate des fluorierten Gases geregelt wird.

4.  Verfahren nach Anspruch 1, dadurch gekennzeichnet, dass die chemische Reaktion durch eine im Reaktor (3) angeordnete Zündvorrichtung (7) eingeleitet wird.

5.  Verfahren nach Anspruch 4, dadurch gekennzeichnet, dass die Zündvorrichtung (7) einen elektrisch, chemisch oder mechanisch wirkenden Zündmechanismus aufweist.

6.  Verfahren nach einem der Ansprüche 1 bis 5, dadurch gekennzeichnet, dass zusätzlich mindestens ein zweiter mit dem Gas bei erhöhter Temperatur chemisch reagierender Reaktionspartner verwendet wird, welcher mit dem Gas unter Bildung von überwiegend festen Reaktionsprodukten und unter Freisetzung von Reaktionsenthalpie reagiert, welche einen abweichenden Wert aufweist von Reaktionsenthalpie, die durch die bei der Grenztemperatur eingeleitete Reaktion freigesetzt wird.

7.  Verfahren nach Anspruch 6, dadurch gekennzeichnet, dass der erste, der zweite, ein gegebenenfalls vorgesehener und mit dem Gas unter Freisetzung einer abweichenden dritten Reaktionsenthalpie reagierender dritter Reaktionspartner sowie gegebenenfalls vorgesehene und mit dem Gas unter Freisetzung weiterer abweichender Reaktionsenthalpien reagierende weitere Reaktionspartner in Mengen miteinander vermischt werden, dass die chemische Reaktion bei einer effektiven Reaktionstemperatur frei von Reaktionsinstabiltäten ausgeführt wird.

8.  Verfahren nach einem der Ansprüche 1 bis 7, dadurch gekennzeichnet, dass der erste, der zweite, der dritte und/oder weitere Reaktionspartner jeweils ein Oxid enthalten.

9.  Verfahren nach Anspruch 8, dadurch gekennzeichnet, dass das Oxid Alkali, Erdalkali und/oder Aluminium enthält.

10. Verfahren nach einem der Ansprüche 1 bis 7, dadurch gekennzeichnet, dass der erste, der zweite, der dritte und/oder weitere Reaktionspartner jeweils ein Metall enthalten.

11. Verfahren nach einem der Ansprüche 1 bis 10, dadurch gekennzeichnet, dass als erster, zweiter, dritter und/oder weiterer Reaktionspartner (4) mindestens eine Flüssigkeit verwendet wird.

12. Verfahren nach Anspruch 11, dadurch gekennzeichnet, dass die Flüssigkeit ein geschmolzenes Metall ist.

13. Verfahren nach einem der Ansprüche 1 bis 12, dadurch gekennzeichnet, dass gegebenenfalls im Gas vorhandene Zersetzungsprodukte vor dem Ausführen der chemischen Reaktion ausgefiltert werden.

14. Vorrichtung zur Durchführung des Verfahrens nach einem der Ansprüche 1 bis 13, dadurch gekennzeichnet, dass der Reaktor ein evakuierbares Gehäuse sowie ein den Druck des zu entsorgenden Gases anzeigendes Messgerät (8) enthält.

15. Vorrichtung zur Durchführung des Verfahrens nach einem der Ansprüche 1 bis 13, dadurch gekennzeichnet, dass der Reaktor (3) als aufblasbares, flexibles Gehäuse, insbesondere als Ballonhülle, ausgebildet ist.

16. Vorrichtung nach Anspruch 15, dadurch gekennzeichnet, dass der mindestens eine Reaktionspartner (4) als Wandbeschichtung in das flexible Gehäuse eingelagert ist.

17. Vorrichtung zur Durchführung des Verfahrens nach Anspruch 2 oder 3, dadurch gekennzeichnet, dass dem heizbaren Filter (6) ein auf einer geringeren Temperatur als der Grenztemperatur gehaltenes, kaltes Filter (13) nachgeschaltet ist.

Fig.1

Fig.2

**Europäisches Patentamt**

## EUROPÄISCHER RECHERCHENBERICHT

Nummer der Anmeldung

EP 99 81 0179

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 771 579 A (CENTRAL GLASS COMPANY, LIMITED) 7. Mai 1997 * Seite 2, Zeile 40 - Seite 2, Zeile 59 * * Seite 4, Zeile 20 - Seite 5, Zeile 12; Beispiele 1-5,22,23 * | 1,2,6-9 | B01D53/48 B01D53/68 B01D53/70 A62D3/00 |
| Y | | 4,5 | |
| Y | DE 43 19 118 A (F-W BREITBARTH ET AL) 15. Dezember 1994 * Spalte 1, Zeile 1 - Spalte 4, Zeile 13; Beispiele 1,2 * | 4,5 | |
| X | WO 97 49479 A (CS-GMBH HALBLEITER- UND SOLARTECHNOLOGIE) 31. Dezember 1997 * Seite 3, Zeile 9 - Seite 10, Zeile 21 * | 1,2,6-9 | |
| X | US 5 416 247 A (J. L. WEBSTER) 16. Mai 1995 * Spalte 1, Zeile 45 - Spalte 4, Zeile 2; Beispiel 1 * | 1,2,6-9 | |
| X | EP 0 667 180 A (CS-GMBH HALBLEITER- UND SOLARTECHNOLOGIE ) 16. August 1995 * Seite 2, Zeile 43 - Seite 5, Zeile 15 * | 1,2,6-9 | **RECHERCHIERTE SACHGEBIETE (Int.Cl.6)** B01D A62D |
| X | DE 196 25 770 A (DR. E. BILGER) 2. Januar 1998 * Seite 2, Zeile 42 - Seite 4, Zeile 35 * | 1,2,10 | |
| X | US 5 569 810 A (O. TSUJI) 29. Oktober 1996 * Spalte 1, Zeile 60 - Spalte 5, Zeile 20 * | 1,4,5,14 | |
| X | WO 91 08023 A (IPS INTERPROJECT SERVICE AB) 13. Juni 1991 * Seite 2, Zeile 15 - Seite 6, Zeile 27 * | 1,12 | |

-/--

Der vorliegende Recherchenbericht wurde für alle Patentansprüche erstellt

| Recherchenort | Abschlußdatum der Recherche | Prüfer |
|---|---|---|
| DEN HAAG | 6. Juli 1999 | Doolan, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 99 81 0179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO 94 03237 A (EA TECHNOLOGY LIMITED ET AL) 17. Februar 1994 <br> * Seite 1, Zeile 23 - Seite 4, Zeile 18 * | 1,12 | |
| P,X | EP 0 895 801 A (SHOWA DENKO KABUSHIKI KAISHA) 10. Februar 1999 <br> * Seite 2, Zeile 40 - Seite 5, Zeile 42 * <br> * Seite 6, Zeile 45 - Seite 8, Zeile 4 * | 1,2,6 | |
| D,A | FR 2 732 608 A (SCHNEIDER ELECTRIC SA) 11. Oktober 1996 <br> * Seite 5, Zeile 1 - Seite 7, Zeile 35 * | 14 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 6. Juli 1999 | Doolan, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 81 0179

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-07-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 771579 | A | 07-05-1997 | JP | 9122442 A | 13-05-1997 |
| | | | JP | 10028839 A | 03-02-1998 |
| | | | US | 5817284 A | 06-10-1998 |
| DE 4319118 | A | 15-12-1994 | KEINE | | |
| WO 9749479 | A | 31-12-1997 | DE | 19719834 A | 19-11-1998 |
| | | | EP | 0907402 A | 14-04-1999 |
| US 5416247 | A | 16-05-1995 | KEINE | | |
| EP 667180 | A | 16-08-1995 | DE | 4404329 A | 17-08-1995 |
| | | | DE | 59505471 D | 06-05-1999 |
| | | | JP | 7265664 A | 17-10-1995 |
| | | | US | 5709734 A | 20-01-1998 |
| DE 19625770 | A | 02-01-1998 | KEINE | | |
| US 5569810 | A | 29-10-1996 | JP | 8024560 A | 30-01-1996 |
| WO 9108023 | A | 13-06-1991 | SE | 467483 B | 27-07-1992 |
| | | | EP | 0502063 A | 09-09-1992 |
| | | | SE | 8903972 A | 25-05-1991 |
| WO 9403237 | A | 17-02-1994 | AT | 150654 T | 15-04-1997 |
| | | | CA | 2141797 A | 17-02-1994 |
| | | | DE | 69309281 D | 30-04-1997 |
| | | | DE | 69309281 T | 10-07-1997 |
| | | | EP | 0653948 A | 24-05-1995 |
| | | | ES | 2099595 T | 16-05-1997 |
| | | | JP | 8502903 T | 02-04-1996 |
| | | | US | 5545390 A | 13-08-1996 |
| EP 895801 | A | 10-02-1999 | JP | 11047551 A | 23-02-1999 |
| | | | JP | 11047552 A | 23-02-1999 |
| FR 2732608 | A | 11-10-1996 | ES | 2117561 A | 01-08-1998 |

FPO FORM P0461

Für nähere Einzelheiten zu diesem Anhang : siehe Amtsblatt des Europäischen Patentamts, Nr.12/82